# EUROPÄISCHE PATENTANMELDUNG

(11) **EP 1 923 755 A1**
(43) Veröffentlichungstag der Anmeldung: **21.05.2008**
(21) Anmeldenummer: 06024035.5
(22) Anmeldetag: 20.11.2006
(51) Int. Cl.: G05B 19/05

(54) **Verfahren für die gemeinsame Darstellung von Ablaufdiagrammen**

(71) Anmelder: SIEMENS AKTIENGESELLSCHAFT, 80333 München (DE)
(72) Erfinder: Lange, Ronald, 90766 Fürth (DE); Schlosser, Michael, 91125 Schwalbach (DE)

(57) **Zusammenfassung**

Die Erfindung betrifft ein System und Verfahren bei dem für die verschiedenen Beschreibungsformen des Ablaufs A, B, C (mindestens 2) ein gemeinsames Datenmodell/Datenablage 1 benutzt wird. Die entsprechende Darstellung wird durch Interpretation des Datenmodells 1 erzeugt. Damit kann in die verschiedenen Darstellungsformen durch Viewumschaltung gewechselt werden.

## Beschreibung

Die Erfindung betrifft ein System und ein Verfahren zur gemeinsamen Darstellung von Ablaufdiagrammen.

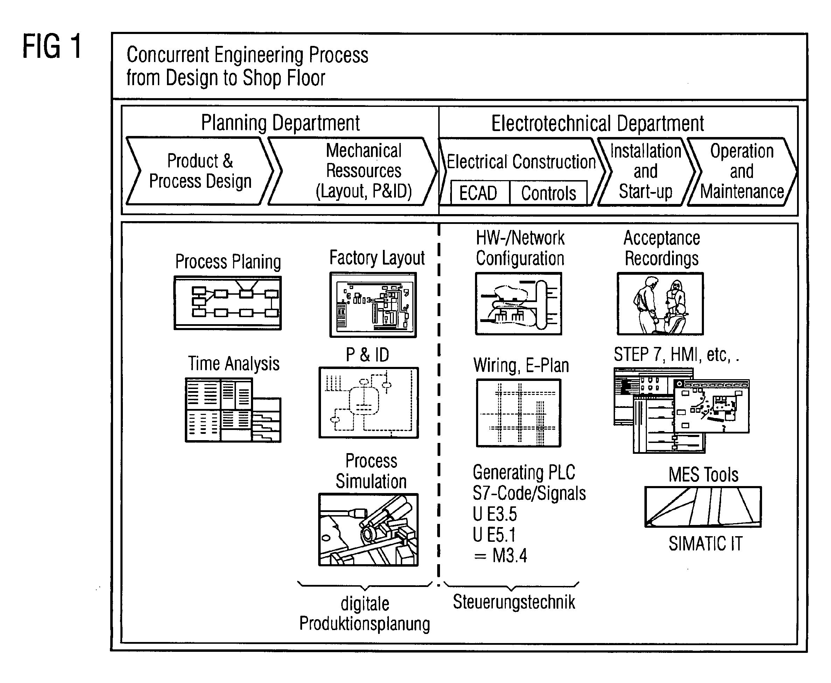

Das der Erfindung zugrunde liegende Problem ist der Datenaustausch innerhalb der Engineering Kette bei der Anlagenplanung im industriellen Umfeld. Hier geht es speziell um den Übergang zwischen der digitalen Produktionsplanung (mechanische Konstruktion, Robotorzellenplanung) und der Steuerungstechnik (siehe Fig. 1).

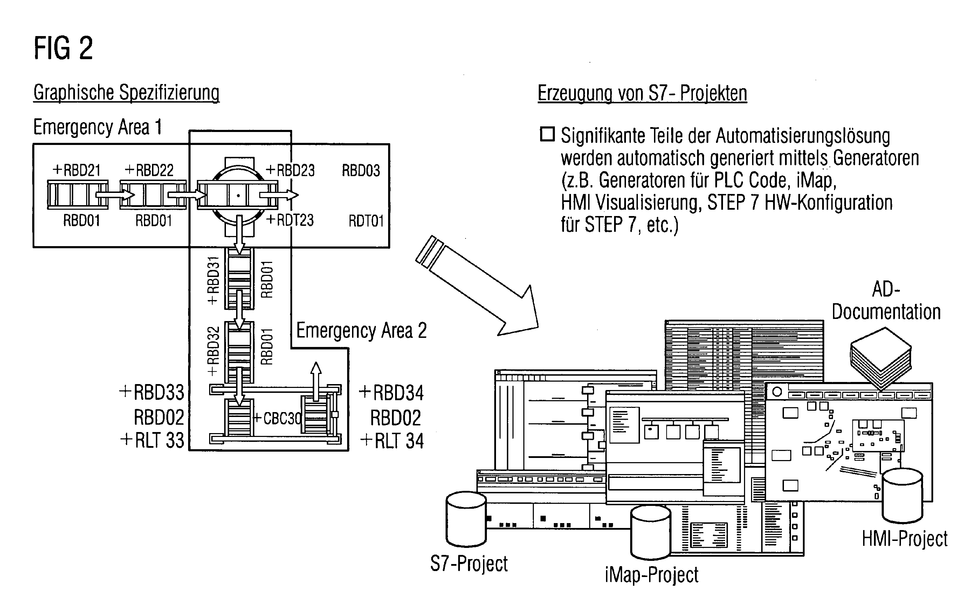

Bei der mechanischen Konstruktion ist das Anlagenlayout führend. Aus diesen Informationen können die Daten der Steuerungstechnik (SPS-Programmierung, HMI, ...) teilweise erzeugt werden. Dieser Datenübergang wird z.B. durch das Produkt SIMATIC Automation Designer adressiert (siehe Fig. 2).

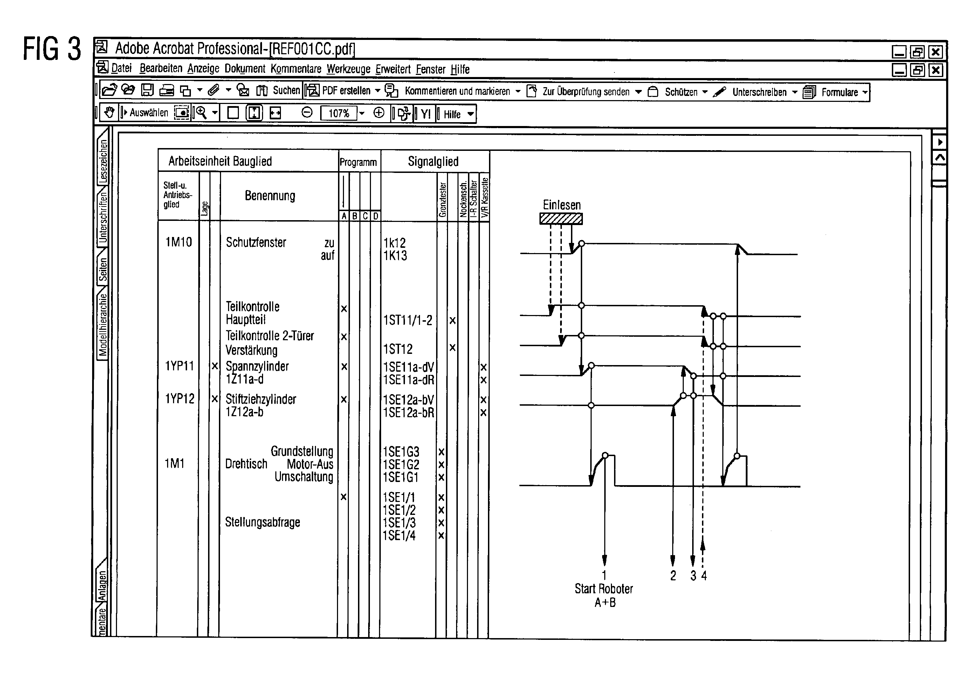

Neben der Erstellung des Anlagenlayout erstellt der mechanische Konstrukteur auch eine Ablaufbeschreibung. Diese wird typischerweise mit Impulsdiagrammen (Schaltfolgediagramme) erstellt (siehe Fig. 3).

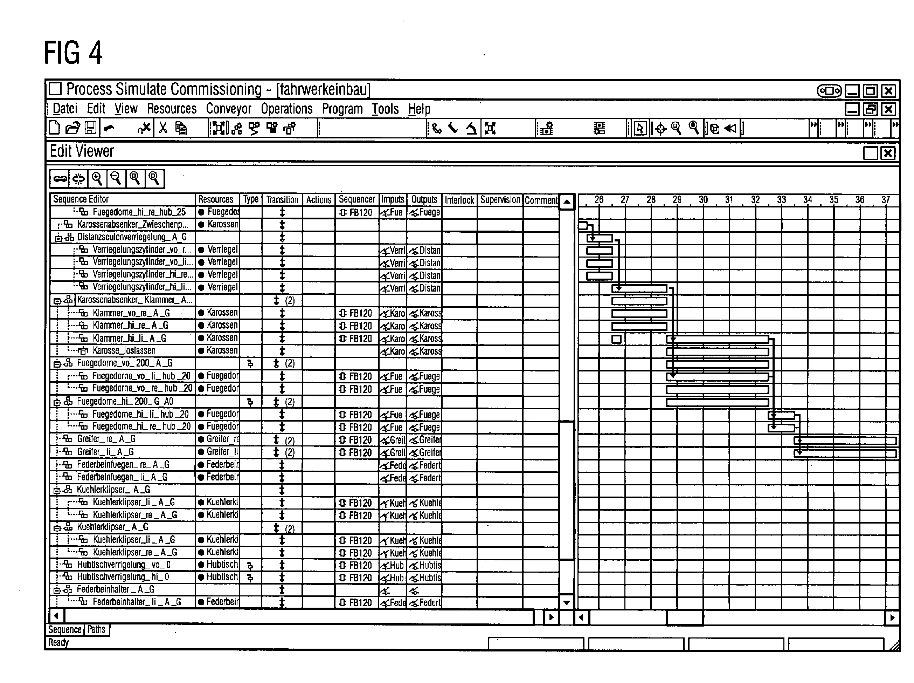

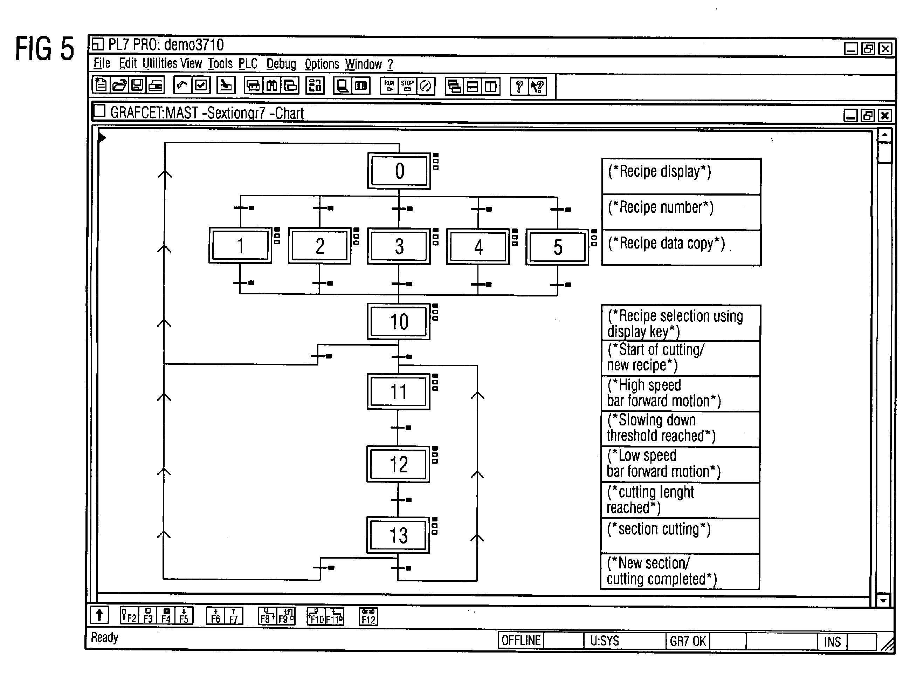

Neben den Impulsdiagrammen werden auch Gantt-Diagramme zur Beschreibung des Ablaufs verwendet, dies ist insbesondere bei der Robotorzellenplanung anzutreffen (siehe Fig. 4). Der Steuerungstechniker beschreibt Abläufe hingegen jedoch typischerweise mit Sequential Function Charts (SFC, siehe Fig. 5) .

Das grundlegende Problem ist, dass alle Beschreibungen zwar den Ablauf der Anlage beschreiben, aber aufgrund der unterschiedlichen Darstellungsweise ein Datenaustausch schwierig bis nicht möglich ist. Besonders gravierend ist die Problematik des "Round-Trips", d.h. wenn ein SPS Techniker aufgrund der Vorgaben des Mechanikers (Impulsdiagramm) einen SFC erstellt hat, diesen jedoch ergänzt/ändert, können diese Modifikationen - aufgrund der verschiedenen Beschreibungsmittel - wieder schwierig in das Impulsdiagramm umgewandelt werden.

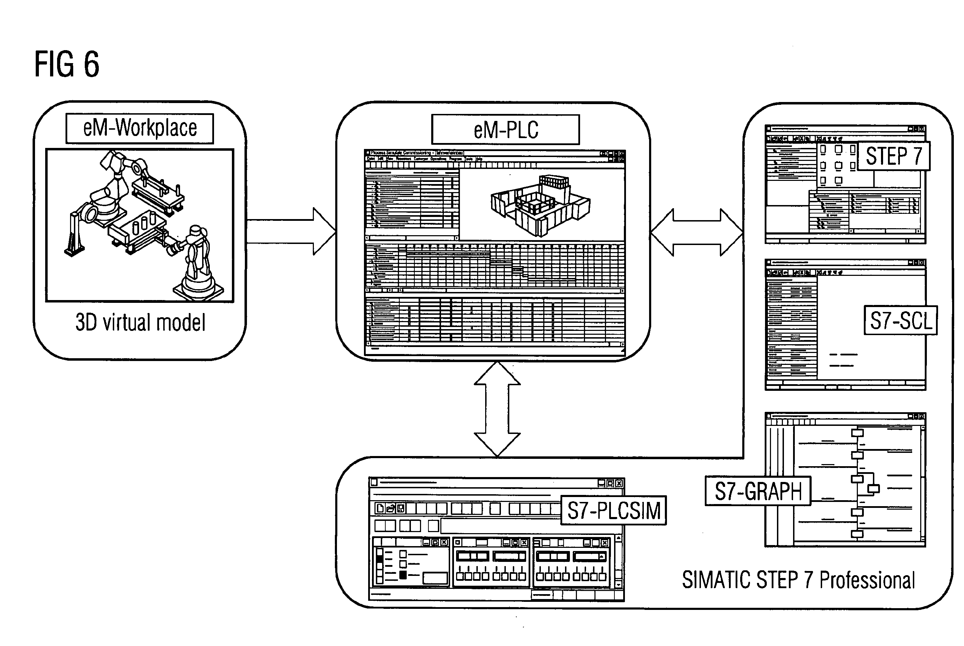

Folgende Lösungen für das Problem sind bekannt:
- Transformation von einer Beschreibungsform manuell in die andere durch intellektuelle Leistung. Eine Verifikation, ob die beiden Beschreibungen zueinander widerspruchsfrei sind, ist maschinell nicht möglich. Ebenso sind spätere Änderungen schwierig nachzuziehen.
- Generatoren: Aus der allgemeinen Ablaufbeschreibung wird direkt zielsystemspezifischer Code erzeugt. Dies wird beispielsweise beim Produkt eM-PLC durchgeführt, bei der aus dem Gantt-Diagramm direkt SIMATIC S7 spezifischer Code erzeugt wird. (siehe Fig. 6)

Diese Lösung hat zum einen den Nachteil, dass Änderungen durch den Steuerungstechniker nicht in die Ablaufbeschreibung der Roboterzellenplanung zurückfließen, zum anderen, dass direkt zielsystemspezifischer Code erzeugt wird, der für z.B. den Mechaniker nicht verständlich ist. Ein weiterer Nachteil ist, dass auch bei der Roboterzellenplanung nicht nur Gantt-Diagramme verwendet werden. Es muss also auch die durch zusätzliche Impulsdiagramme beschriebene Information in den SPS Code (manuell) eingepflegt werden.

Die Aufgabe der vorliegenden Erfindung besteht daher darin, ein Verfahren und ein System anzugeben, welches einen leichteren Datenaustausch zwischen den die Anlage beschreibenden Anwendungen ermöglicht.

Die Aufgabe wird gelöst durch den Gegenstand der Ansprüche 1 und 5.

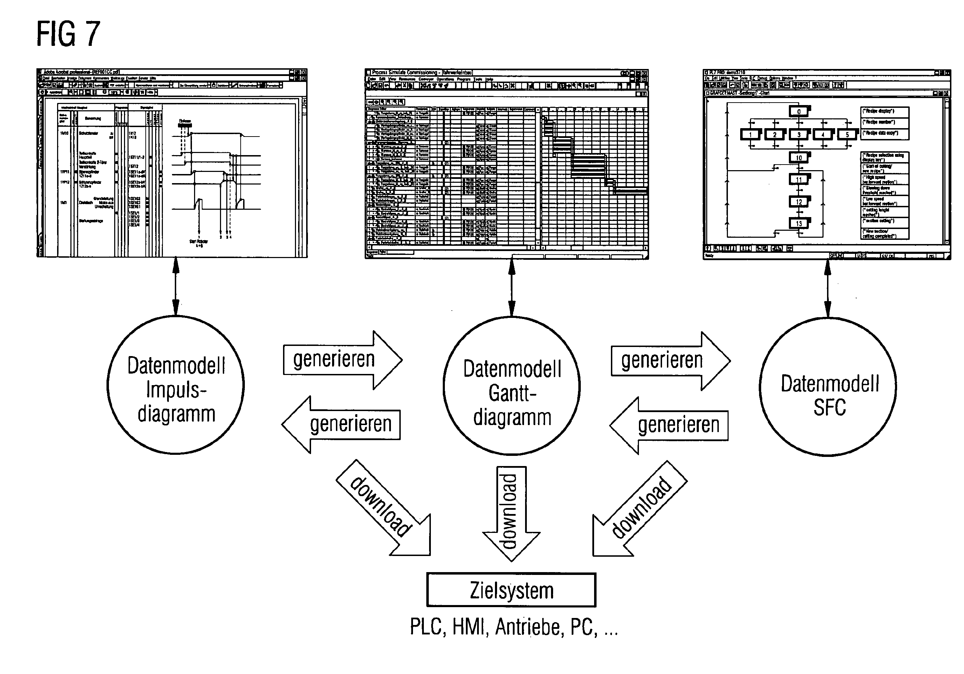

Die aktuelle Stand der Technik zu der o.g. Problemstellung lässt sich wie folgt darstellen. Die verschiedenen Darstellungsarten für Abläufe definieren ihr eigenes Datenmodell. Die Übergänge werden durch Generatoren realisiert. Zum Zielsystem wird dieser (unidirektionale) Generatorschritt als Download bezeichnet, da hier der Übergang zu einer zielsystemspezifischen Sprache (z.B. einer SIMATIC S7 SPS) erfolgt (siehe Fig. 7).

Der Erfindung liegt die Erkenntnis zugrunde, dass für die verschiedenen Darstellungsformen ein gemeinsames Datenmodell definiert werden kann. Der besondere Vorteil in der Nutzung dieser Erkenntnis besteht darin, dass die verschiedenen Darstellungsarten dann nur unterschiedliche Präsentationen (Views) dieses gemeinsamen Datenmodells sind und daher eine verlustfreie Umschaltung zwischen diesen Views möglich ist (auch nach Modifikationen).

In der vorliegenden Anmeldung wird beispielhaft die Beschreibung des Automatikbetriebs angeführt, das Konzept ist aber auf die Beschreibung des Handbetriebs, Synchronisationsbetriebs, und weitere denkbare Szenarien übertragbar.

Im Folgenden wird die Erfindung anhand der in den Figuren dargestellten Ausführungsbeispiele näher beschrieben und erläutert.

Es zeigen:
- Fig 1: Darstellung des Engeneering Prozesses,
- Fig 2: Datenübergang von Anlagenlayout zur Steuerungstechnik,
- Fig 3: Beispiel für ein Impulsdiagramm,
- Fig 4: Beispiel für ein Gantt-Diagramm,
- Fig 5: Beispiel für die Darstellung der Steuerungsabläufe in einem Sequential Function Chart (SFC),
- Fig 6: Beispiel für die Generierung von zielsystemspezifischem Code,
- Fig 7: Darstellung des bekannten Stands der Technik,
- Fig 8: Schematische Darstellung des Verfahrens und des Systems zur gemeinsamen Darstellung von Ablaufdiagrammen,
- Fig 9: Datenaustausch über Im-und Export,
- Figs 10 - 13: Darstellung eines Ausführungsbeispiels

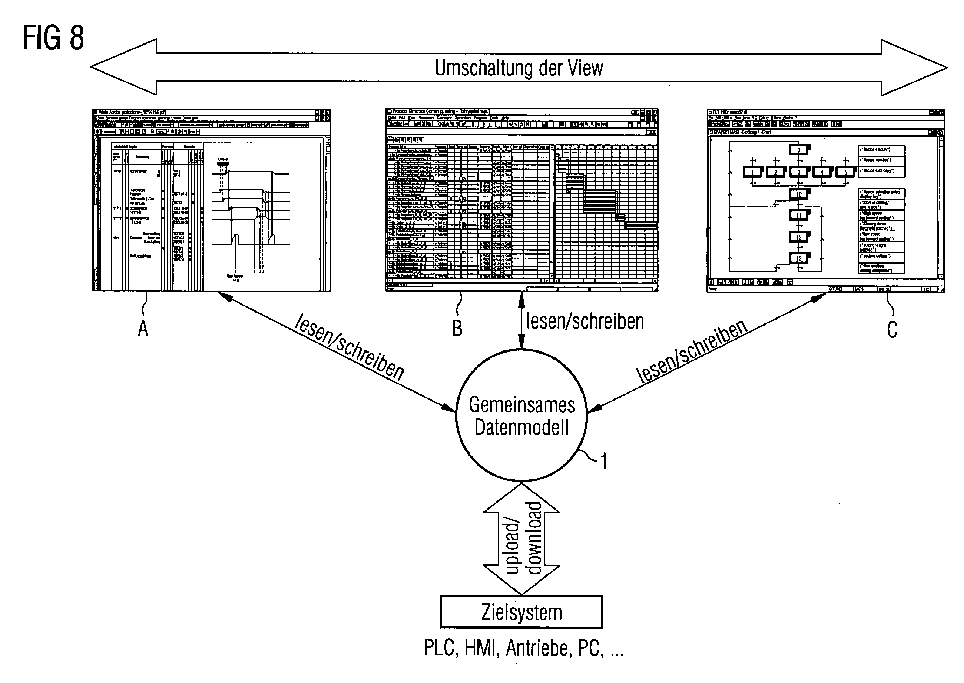

Fig 8 zeigt diese Grundidee der Erfindung: Für die verschiedenen Beschreibungsformen des Ablaufs A, B, C (mindestens 2), wird ein gemeinsames Datenmodell/Datenablage 1 benutzt. Die entsprechende Darstellung wird durch Interpretation des Datenmodells 1 erzeugt. Damit kann in die verschiedenen Darstellungsformen durch Viewumschaltung gewechselt werden.

Eine Änderung in einer View ist also sofort in den anderen Views berücksichtigt, es ist keine Generierung nötig. Je nach Ausprägung der Views müssen nicht alle Informationen aus dem gemeinsamen Datenmodell angezeigt werden. Da die Änderungen aber sofort in das gemeinsame Datenmodell 1 eingepflegt werden (es also keine viewspezifische Datenhaltung gibt), können sich dadurch keine Inkonsistenzen ergeben. Aus dem gemeinsamen Datenmodell 1 kann durch einen Generator zielsystemspezifischer Code erzeugt werden. Es ist auch möglich, aus dem zielsystemspezifischen Code wieder das gemeinsame Datenmodell rückzugewinnen (Upload). Vorteilhaft bei dieser Erfindung ist, dass nach Erzeugung des gemeinsamen Datenmodells die Darstellung in der verschiedenen Views erfolgen kann. Beim Stand der Technik würde hingegen z.B. das Datenformat eines Impulsdiagramms erzeugt werden, dieses kann aber auch nur in der Darstellung Impulsdiagramms visualisiert werden. Eine andere Visualisierung erfordert einen Generierschritt.

Ein weiterer Nachteil beim Stand der Technik ist, dass durch die Generierschritte gegebenenfalls Daten verloren gehen, da das Zielformat ein Datum nicht oder nur ungenau darstellen kann. Bei der Erfindung bezieht sich dieser Datenverlust nur auf die View, d.h. in manchen Darstellungen können gewisse Daten nicht oder nur ungenau dargestellt werden. Dies ist somit kein echter Datenverlust, da die eigentlichen Daten weiterhin im gemeinsamen Datenmodell vorhanden sind und bei einer Viewumschaltung auch entsprechend dargestellt werden (in den Views, die diese Daten darstellen).

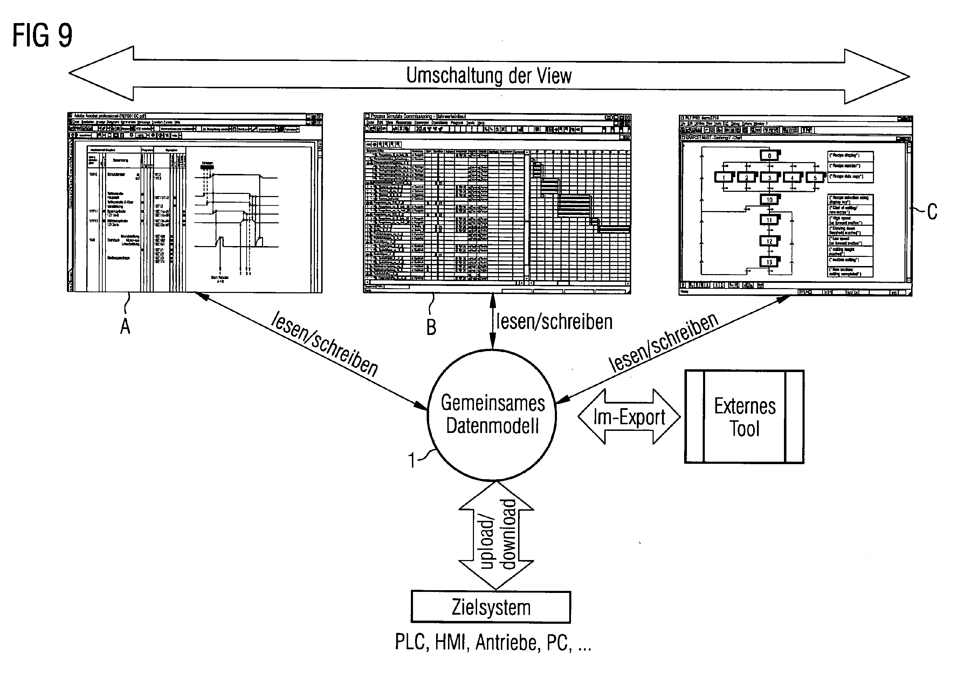

Eine weitere vorteilhafte Ausbildung der Erfindung ist in Fig. 9 dargestellt. Hier ist die Eignung des gemeinsamen Datenmodells als Austauschformat dargestellt. Dadurch können Daten über Im-/Export mittels eines externen Tools ausgetauscht werden, ohne, dass bekannt sein muss, in welcher View die Daten visualisiert werden sollen. Beim Stand der Technik wird - wie auch schon beim Upload - z.B. das Datenformat eines Impulsdiagramms importiert/exportiert, dieses kann aber auch nur in der Darstellung Impulsdiagramms visualisiert werden. Eine andere Visualisierung erfordert einen Generierschritt.

### Ausführungsbeispiel:

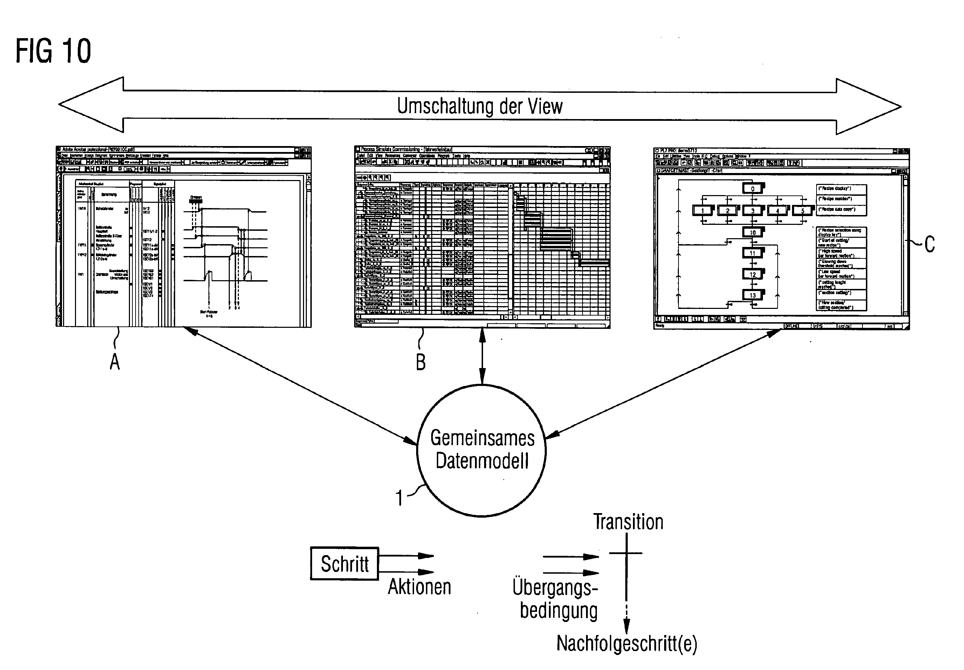

Das gemeinsame Modell besteht aus
- Schritten mit Aktionen
- Transitionen mit Übergangsbedingungen und Nachfolgeschritt Die Abbildung dieses Modells auf die Darstellungen Impulsdiagramm, Gantt und SFC sind in den nachfolgenden Figs 10 bis 13 dargestellt. Erweiterung in Richtung Zustandsgraphen oder weiterer Ablaufbeschreibungen sind möglich.

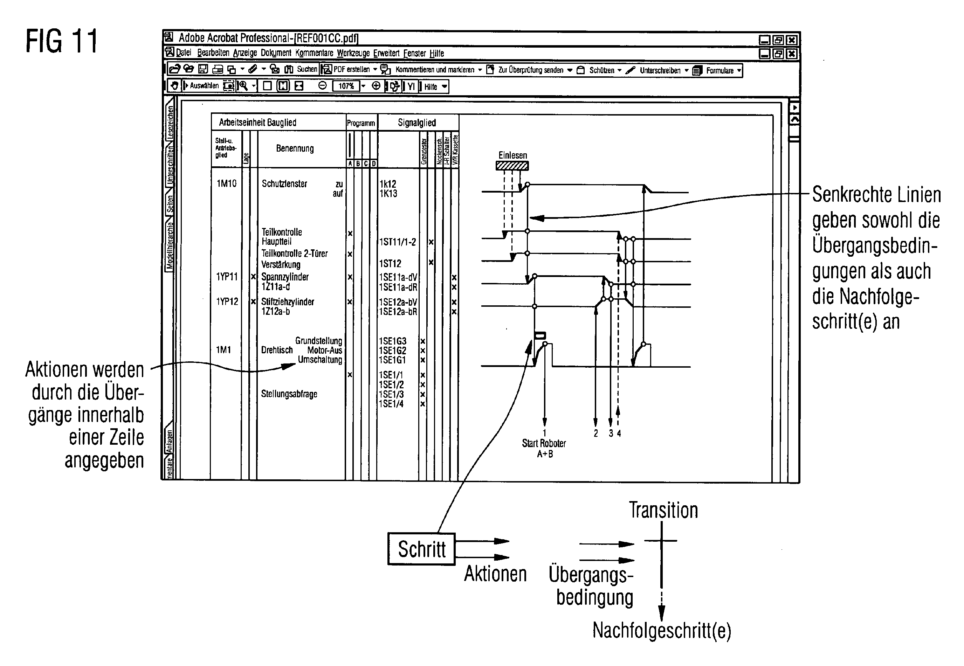

In Fig 11 werden Aktionen durch die Übergänge innerhalb einer Zeile angegeben. Senkrechte Linien geben sowohl die Übergangsbedingungen als auch die Nachfolgeschritt(e) an.

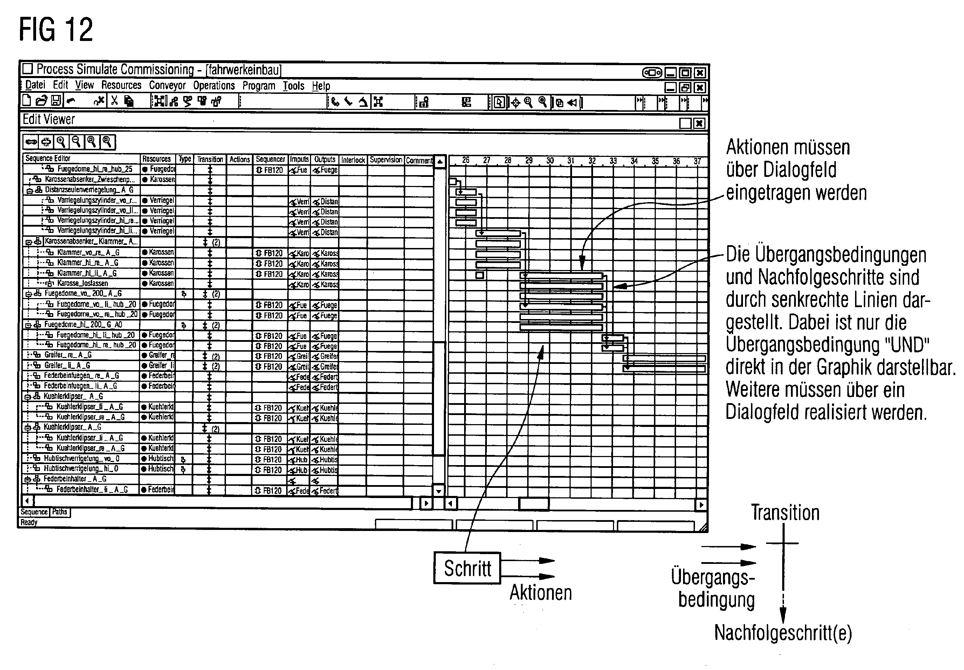

In Fig 12 wird gezeigt, dass Aktionen über ein Dialogfeld eingetragen werden. Die Übergangsbedingungen und Nachfolgeschritte sind durch senkrechte Linien dargestellt. Dabei ist nur die Übergangsbedingung "UND" direkt in der Graphik darstellbar. Weitere müssen über ein Dialogfeld realisiert werden.

In Fig. 13 werden Aktionen und Übergangsbedingungen über Dialogfelder eingegeben.

## Patentansprüche

1. Verfahren zur gemeinsamen Darstellung von Ablaufdiagrammen, bei dem für verschiedene Beschreibungsformen des Ablaufs A, B, C ein gemeinsames Datenmodell 1 benutzt wird, wobei die entsprechende Darstellung der Daten in dem jeweiligen Ablaufdiagramm durch Interpretation des Datenmodells 1 erzeugt wird, wodurch in die verschiedenen Darstellungsformen durch Viewumschaltung gewechselt werden kann.

2. Verfahren nach Anspruch 1, bei dem eine Änderung in einer View sofort in den anderen Views sofort berücksichtigt wird.

3. Verfahren nach Anspruch 1 oder 2, bei dem das gemeinsamen Datenmodells als Austauschformat verwendet wird, wodurch Daten über Im-/Export mittels eines externen Tools ausgetauscht werden können, ohne, dass bekannt sein muss, in welcher View die Daten visualisiert werden sollen.

4. Verfahren nach einem der vorhergehenden Ansprüche, bei dem das gemeinsame Datenmodell 1 aus
• Schritten mit Aktionen und
• Transitionen mit Übergangsbedingungen und Nachfolgeschritt besteht.

5. System zur gemeinsamen Darstellung von Ablaufdiagrammen, mit einem gemeinsamen Datenmodell 1 für verschiedene Beschreibungsformen des Ablaufs A, B, C, wobei die entsprechende Darstellung der Daten in dem jeweiligen Ablaufdiagramm durch Interpretation des Datenmodells 1 erzeugbar ist, wodurch in die verschiedenen Darstellungsformen durch Viewumschaltung gewechselt werden kann.

6. System nach Anspruch 5, bei dem das gemeinsamen Datenmodells als Austauschformat vorgesehen ist, wodurch Daten über Im-/Export mittels eines externen Tools austauschbar sind, ohne, dass bekannt sein muss, in welcher View die Daten visualisiert werden sollen.

7. System nach einem der Ansprüche 5 oder 6, bei dem das gemeinsame Datenmodell 1 aus
• Schritten mit Aktionen und
• Transitionen mit Übergangsbedingungen und Nachfolgeschritt besteht.
